# EUROPÄISCHE PATENTSCHRIFT

(11) **EP 1 412 416 B1**
(45) Veröffentlichungstag und Bekanntmachung des Hinweises auf die Patenterteilung: **29.09.2004**
(21) Anmeldenummer: 02742916.6
(22) Anmeldetag: 25.04.2002
(51) Int. Cl.: C08G 77/458, C08G 18/61, C09J 183/10, C09D 183/10, C08L 83/10

(54) **ORGANOPOLYSILOXAN/POLYHARNSTOFF/POLYURETHAN-BLOCKCOPOLYMERE**
ORGANOPOLYSILOXANE / POLYUREA / POLYURETHANE BLOCK COPOLYMERS
COPOLYMERES SEQUENCES ORGANOPOLYSILOXANE/POLYCARBAMIDE/POLYURETHANNE

(30) Priorität: 02.08.2001 DE 10137855
(43) Veröffentlichungstag der Anmeldung: 28.04.2004
(73) Patentinhaber: Consortium für elektrochemische Industrie GmbH, 81379 München (DE)
(72) Erfinder: SCHÄFER, Oliver, 81377 München (DE); DELICA, Sabine, 81825 München (DE); SCHINDLER, Wolfram, 84577 Tüssling (DE); PACHALY, Bernd, 84561 Mehring-Öd (DE)
(74) Vertreter: Fritz, Helmut, Dr.
(86) Internationale Anmeldenummer: PCT/EP2002/004601
(87) Internationale Veröffentlichungsnummer: WO 2003/014194

(56) Entgegenhaltungen:
- EP-A- 0 250 248
- WO-A-96/34029
- WO-A-96/34030

## Beschreibung

Die Erfindung betrifft Organopolysiloxan/Polyharnstoff/Polyurethan-Blockcopolymere enthaltende Zusammensetzungen.

Die Eigenschaften von Polyurethanen und Siliconelastomeren sind in weiten Bereichen komplementär. Polyurethane zeichnen sich durch ihre hervorragende mechanische Festigkeit, Elastizität und eine sehr gute Haftung, Abriebfestigkeit sowie eine einfache Verarbeitung durch Extrusion aus der Schmelze aus. Siliconelastomere dagegen besitzen eine ausgezeichnete Temperatur, UV-, und Bewitterungsstabilität. Dabei behalten sie ihre elastischen Eigenschaften bei tieferen Temperaturen bei und neigen deshalb auch nicht zur Versprödung. Daneben besitzen sie spezielle wasserabweisende und antihaftende Oberflächeneigenschaften.
Herkömmliche Polysiloxane werden für Elastomere, Dichtungen, Kleb- und Dichtstoffe oder Antihaftbeschichtungen in Form thixotroper Pasten angewendet. Um die gewünschten Endfestigkeiten zu erreichen, wurden unterschiedliche Härtungswege der Massen entwickelt, mit dem Ziel, die gewünschten Strukturen zu festigen und die mechanischen Eigenschaften einzustellen. Meist müssen die Polymere aber durch den Zusatz von verstärkend wirkenden Additiven, wie beispielsweise pyrogenen Kieselsäuren abgemischt werden, um ausreichende mechanische Eigenschaften zu erreichen. Bei den Härtungssystemen unterscheidet man im Wesentlichen zwischen Hochtemperatur vulkanisierenden Systemen (HTV) und Raumtemperatur vulkanisierenden Systemen (RTV). Bei den RTV-Massen gibt es sowohl ein- (1K) als auch zweikomponentige (2K) Systeme. In den 2K-Systmen werden die beiden Komponenten gemischt und damit katalytisch aktiviert und ausgehärtet. Der Härtungsmechanismus und der benötigte Katalysator können dabei unterschiedlich sein. Üblicherweise erfolgt die Härtung durch eine peroxidische Vernetzung, durch Hydrosilylierung mittels Platinkatalyse oder z.B. durch Kondensationsreaktionen. Solche 2K-Systeme besitzen zwar sehr lange Topfzeiten, zur Erreichung optimaler Eigenschaften müssen jedoch die Mischungsverhältnisse beider Komponenten genau eingehalten werden, was zu einem erhöhten apparativen Aufwand bei der Verarbeitung führt.
1K-Systeme härten ebenfalls durch eine peroxidische Vernetzung, durch Hydrosilylierung mittels Platinkatalyse oder z.B. durch Kondensationsreaktionen. Hier jedoch ist entweder ein zusätzlicher Verarbeitungsschritt zum Eincompoundieren des Vernetzungskatalysators erforderlich oder die Massen haben nur eine begrenzte Topfzeit. All diesen Systeme ist jedoch gemeinsam, daß die Produkte nach der Verarbeitung unlöslich sind und z.B. auch nicht mehr recycliert werden können.

Daher sollte die Kombination von Urethan- und Silicon-Polymeren Materialien mit guten mechanischen Eigenschaften zugänglich machen, die sich zugleich durch eine gegenüber den Siliconen stark vereinfachten Verarbeitungsmöglichkeiten auszeichnen, jedoch weiterhin die positiven Eigenschaften der Silicone besitzen. Die Kombination der Vorteile beider Systeme kann daher zu Verbindungen mit niedrigen Glastemperaturen, geringen Oberflächenenergien, verbesserten thermischen und photochemischen Stabilitäten, geringer Wasseraufnahme und physiologisch inerten Materialien führen.

Untersuchungen wurden durchgeführt, um die schlechten Phasenverträglichkeiten der beiden Systeme zu überwinden. Durch Herstellung von Polymerblends konnten nur in wenigen speziellen Fällen ausreichende Verträglichkeiten erreicht werden. Erst mit der in I. Yilgör, Polymer, 1984 (25), 1800 und in EP-A-250248 beschriebenen Herstellung von Polydiorganosiloxan-Harnstoffblockcopolymeren konnte dieses Ziel erreicht werden. Die Umsetzung der Polymerbausteine erfolgt letztlich nach einer vergleichsweise einfachen Polyaddition, wie sie für die Herstellung von Polyurethanen angewendet wird. Dabei werden als Ausgangsmaterialien für die Siloxan-Harnstoff-Copolymere als Siloxanbausteine aminoalkyl-terminierte Polysiloxane verwendet. Diese bilden die Weichsegmente in den Copolymeren, analog zu den Polyethern in reinen Polyurethansystemen. Als Hartsegmente werden gängige Diisocyanate eingesetzt, wobei diese auch noch durch Zusatz von Diaminen, wie z.B. 1,6-Diaminohexan oder Dihydroxyverbindungen wie z.B. Butandiol zur Erreichung höherer Festigkeiten modifiziert werden können. Die Umsetzung der Aminoverbindungen mit Isocyanaten erfolgt dabei spontan und benötigt in aller Regel keinen Katalysator.
Die Silicon- und Isocyanat-Polymerbausteine sind in einem weiten Bereich problemlos mischbar. Die mechanischen Eigenschaften werden durch das Verhältnis der unterschiedlichen Polymerblöcke Silicon-Weichsegmente und Harnstoff-Hartsegmente und wesentlich durch das verwendete Diisocyanat bestimmt. Durch die starken Wechselwirkungen der Wasserstoffbrücken zwischen den Harnstoffeinheiten besitzen diese Verbindungen einen definierten Erweichungspunkt und es werden thermoplastische Materialien erhalten. Der Einsatz dieser thermoplastischen Materialien ist in vielen Anwendungen denkbar: in Dichtmassen, Klebstoffen, als Material für Fasern, als Kunststoffadditiv z.B. als Schlagzähverbesserer oder Flammschutzmittel, als Material für Entschäumerformulierungen, als Hochleistungspolymer (Thermoplast, thermoplastisches Elastomer, Elastomer), als Verpackungsmaterial für elektronische Bauteile, in Isolations- oder Abschirmungsmaterialien, in Kabelummantelungen, in Antifoulingmaterialien, als Additiv für Putz-,Reinigungs- oder Pflegemittel, als Additiv für Körperpflegemittel, als Beschichtungsmaterial für Holz, Papier und Pappe, als Formentrennmittel, als biokompatibles Material in medizinischen Anwendungen wie Kontaktlinsen, als Beschichtungsmaterial für Textilfasern oder textile Gewebe, als Beschichtungsmaterial für Naturstoffe wie z.B. Leder und Pelze, als Material für Membranen und als Material für photoaktive Systeme z.B. für lithographische Verfahren, opt. Datensicherung oder opt. Datenübertragung.

Es bestand also ein Bedarf an Siloxan-Harnstoff-Copolymeren, welche hohe Molekulargewichte und dadurch bedingt günstige mechanische Eigenschaften wie z.B. hohe Reißfestigkeiten und Reißdehnungen aufweisen und zusätzlich gute Verarbeitungseigenschaften, wie niedrige Viskosität und Lösungsmittelfreiheit zeigen. Ein weiterer Härtungsschritt zur Vernetzung dieser Materialien ist nicht nötig, da diese durch schmelzbare Bestandteile physikalische Vernetzungsstellen aufweisen, welche durch Temperaturerhöhung wieder zerstört und neu orientiert werden können. Weiterhin sollte gewährleistet sein, daß diese Materialien aus preisgünstigen und einfach zugänglichen Edukten hergestellt werden können, um mit bereits bestehenden Systemen auch in ökonomischer Hinsicht konkurrieren können.
Sowohl bei Yilgör et al. als auch in EP-A-250248 werden die als Edukt verwendeten aminoalkylfunktionelle Siloxane über Äquilibrierungsreaktionen hergestellt. Dabei wird in EP-A-250248 beschrieben, daß ausschließlich über eine mit speziellen Äquilibrierungskatalysatoren besonders sorgfältig durchgeführte Äquilibrierungsreaktion aminoalkylterminierte PDMS-Ketten erhalten werden, die auch in höheren Molekulargewichtsbereichen eine ausreichende Reinheit besitzen, um bei der Reaktion mit Diisocyanaten die für gute mechanische Eigenschaften der Endpolymere erforderlichen hohen Molekulargewichte sicherzustellen.

Über Äquilibrierungsreaktionen hergestellte difunktionelle Siliconöle haben jedoch mehrere Nachteile:
Die in EP-A-250248 beschriebene Äquilibrierungsreaktion ist eine sehr langwierige Reaktion, bei der außerdem ein sehr teures Edukt wie Bisaminopropyltetramethyldisiloxan und spezielle Katalysatoren verwendet werden müssen, welche extra synthetisiert werden müssen. Dies ist aus ökonomischer Sicht ungünstig. Weiterhin muß am Ende der Äquilibrierungsreaktion der Katalysator entweder thermisch deaktiviert oder neutralisiert werden, was zu Katalysatorresten und somit Verunreinigungen im Endprodukt führt, die Auswirkungen auf die thermische Beständigkeit der so hergestellten Materialien haben. Diese Verunreinigungen sind ebenfalls für einen starken Eigengeruch der daraus synthetisierten Materialien verantwortlich. Weiterhin müssen noch ca. 15 % Siloxancyclen entfernt werden, was aber in der Regel technisch nicht vollständig möglich ist, so daß solche Siloxancyclen im Produkt verbleiben und aus Folgeprodukten ausschwitzen. Während der thermischen Behandlung neigen die so hergestellten Siliconöle dazu, einen deutlich sichtbaren Gelbstich anzunehmen.

Gegenstand der Erfindung ist eine Zusammensetzung, enthaltend ein Organopolysiloxan/Polyharnstoff/Polyurethan-Blockcopolymer (A) der allgemeinen Formel (1) 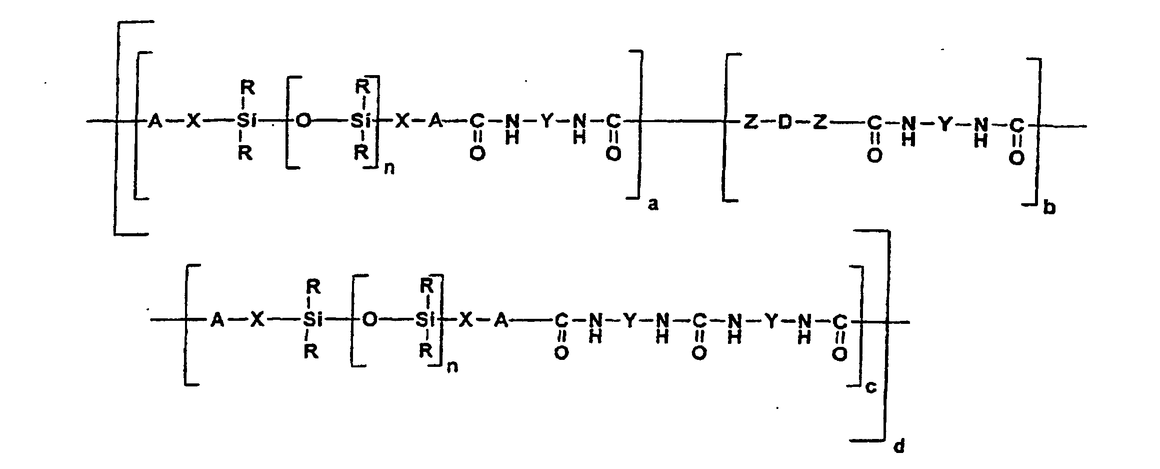 welches erhältlich ist durch ein Verfahren, welches zwei Schritte umfaßt, wobei
im ersten Schritt ein cyclisches Silazan der allgemeinen Formel (2) 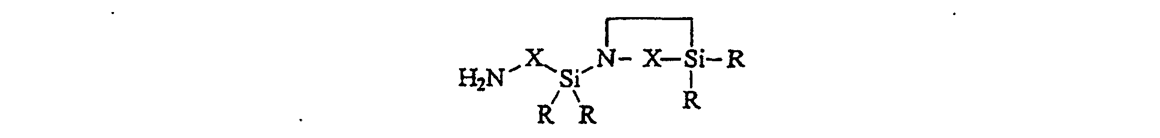 mit siliziumorganischer Verbindung der allgemeinen Formel (3),

(HO)(R₂SiO)ₙ₋₁[H]

zu Aminoalkylpolydiorganosiloxan der allgemeinen Formel (4)

H₂N-X-[SiR₂O]ₙSiR₂-X-NH₂

umgesetzt wird, und
im zweiten Schritt das Aminoalkylpolydiorganosiloxan der allgemeinen Formel (4) mit Diisocyanat der allgemeinen Formel (5)

OCN-Y-NCO

polymerisiert wird, wobei
- **R**: einen einwertigen, gegebenenfalls durch Fluor oder Chlor substituierten Kohlenwasserstoffrest mit 1 bis 20 Kohlenstoffatomen,
- **X**: einen Alkylen-Rest mit 1 bis 20 Kohlenstoffatomen, in dem einander nicht benachbarte Methyleneinheiten durch Gruppen -O- ersetzt sein können,
- **A**: ein Sauerstoffatom oder eine Aminogruppe -NR'-,
- **Z**: ein Sauerstoffatom oder eine Aminogruppe -NR'-,
- **R'**: Wasserstoff oder einen Alkylrest mit 1 bis 10 Kohlenstoffatomen,
- **Y**: einen zweiwertigen, gegebenenfalls durch Fluor oder Chlor substituierten Kohlenwasserstoffrest mit 1 bis 20 Kohlenstoffatomen,
- **D**: einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können,
- **n**: eine Zahl von 1 bis 4000,
- **a**: eine Zahl von mindestens 1,
- **b**: eine Zahl von 0 bis 40,
- **c**: eine Zahl von 0 bis 30 und
- **d**: eine Zahl größer 0 bedeuten.

Die Herstellung des Aminoalkylpolydiorganosiloxans der allgemeinen Formel (4) ist kostengünstig, verläuft unter schonensten Bedingungen und führt zu Produkten, die farblos und geruchsfrei sind. Aminoalkylpolydiorganosiloxan der allgemeinen Formel (4) enthält weder cyclische Siliconverbindungen, da diese schon auf der Stufe der Silanol-terminierten Edukte der allgemeinen Formel (3) entfernt wurden, noch Äquilibrierungskatalysatoren oder deren Reste, da die Umsetzung von Silanol-Gruppen mit dem Heterocyclus der allgemeinen Formel (2) unkatalysiert in sehr kurzer Zeit erfolgt. Daher sind diese funktionalisierten Siliconöle und deren Folgeprodukte geruchsfrei und farblos.

Idealerweise werden im ersten Schritt die Heterocyclen der allgemeinen Formel (2) und die Silanol-Gruppen enthaltenden Edukte in äquimolaren Verhältnissen eingesetzt, da so die Entfernung überschüssigen Heterocyclusses unterbleiben kann. Hierzu wird vorzugsweise der Gehalt an aktivem H im Silanol terminiertem Edukt z.B. durch Titration bestimmt, um so eine zumindest äquimolare Menge an Heterocyclen zugeben zu können. Man erhält Bisaminoalkylterminierte Siloxane der allgemeinen Formel (4) in hoher Reinheit, welche sich ebenfalls zur Herstellung hochmolekularer Siloxan-Harnstoff-Blockcopolymere eignen.

Zur Erreichung kürzerer Reaktionszeiten bei der Herstellung hochreiner Bisaminoalkylterminierter Silicone der allgemeinen Formel (4) wird vorzugsweise ein kleiner Überschuß der heterocyclischen Verbindung der allgemeinen Formel (2)verwendet, welcher anschließend in einem einfachen zusätzlichen Verfahrensschritt wie z.B. der Zugaben kleiner Mengen an Wasser entfernt werden kann.

Vorzugsweise bedeutet **R** einen einwertigen, Kohlenwasserstoffrest mit 1 bis 6 Kohlenstoffatomen, insbesondere nicht substituiert. Besonders bevorzugte Reste **R** sind Methyl, Ethyl, Vinyl und Phenyl.

Vorzugsweise bedeutet **X** einen Alkylen-Rest mit 2 bis 10 Kohlenstoffatomen. Vorzugsweise ist der Alkylen-Rest X nicht unterbrochen.

Vorzugsweise bedeutet **A** eine NH-Gruppe.

Vorzugsweise bedeutet Z ein Sauerstoffatom oder eine NH-Gruppe. Vorzugsweise bedeutet **Y** einen Kohlenwasserstoffrest mit 3 bis 13 Kohlenstoffatomen, der vorzugsweise nicht substituiert ist. Vorzugsweise bedeutet **Y** einen Aralkylen-, linearen oder cyclischen Alkylen-Rest.

Vorzugsweise bedeutet **D** einen Alkylenrest mit mindestens 2, insbesondere mindestens 4 Kohlenstoffatomen und höchstens 12 Kohlenstoffatomen.
Ebenfalls vorzugsweise bedeutet **D** einen Polyoxyalkylenrest, insbesondere Polyoxyethylenrest oder Polyoxypropylenrest mit mindestens 20, insbesondere mindestens 100 Kohlenstoffatomen und höchstens 800, insbesondere höchstens 200 Kohlenstoffatomen.
Vorzugsweise ist der Rest **D** nicht substituiert.

n bedeutet vorzugsweise eine Zahl von mindestens 3, insbesondere mindestens 25 und vorzugsweise höchstens 800, insbesondere höchstens 400, besonders bevorzugt höchstens 250.

Vorzugsweise bedeutet **a** eine Zahl von höchstens 50.

Wenn b ungleich 0, bedeutet **b** vorzugsweise eine Zahl von höchstens 50, insbesondere höchstens 25.

**c** bedeutet vorzugsweise eine Zahl von höchstens 10, insbesondere höchstens 5.

Das Polydiorganosiloxan-Harnstoff-Copolymer der allgemeinen Formel (1) zeigt hohe Molekulargewichte und gute mechanische Eigenschaften bei guten Verarbeitungseigenschaften.

Vor allem durch den Einsatz von Kettenverlängerern wie Dihydroxyverbindungen oder Wasser zusätzlich zu den Harnstoffgruppen kann eine deutliche Verbesserung der mechanischen Eigenschaften erreicht werden. So können Materialien erhalten werden, die in den mechanischen Eigenschaften mit herkömmlichen Siliconkautschuken durchaus vergleichbar sind, jedoch eine erhöhte Transparenz aufweisen und in die kein zusätzlicher aktiver Füllstoff eingearbeitet werden muß.

Falls **b** mindestens 1 ist, kann im zweiten Schritt bis zu 95 Gewichtsprozent, bezogen auf alle eingesetzten Komponenten, an Kettenverlängerern, die ausgewählt werden aus Diaminen, Isocyanat-geblockten Hydroxy-Verbindungen, DihydroxyVerbindungen oder Mischungen davon, eingesetzt werden.

Vorzugsweise weisen die Kettenverlängerer die allgemeinene Formel (6)

HZ-D-ZH,

auf, wobei **D** und **Z** die vorstehenden Bedeutungen aufweisen. Falls **Z** die Bedeutung O hat, kann der Kettenverlängerer der allgemeinenen Formel (6) auch vor der Umsetzung im zweiten Schritt mit mit Diisocyanat der allgemeinen Formel (5) umgesetzt werden. Gegebenenfalls kann als Kettenverlängerer auch Wasser eingesetzt werden.

Vorzugsweise sind im Copolymer der allgemeinen Formel (1), bezogen auf die Summe der Urethan- und Harnstoffgruppen, mindestens 50 Mol-%, insbesondere mindestens 75 Mol-% Harnstoffgruppen enthalten.

Beispiele für die zu verwendenden Diisocyanate der allgemeinen Formel (5) sind aliphatische Verbindungen wie Isophorondiiscyanat, Hexamethylen-1,6-diisocyanat, Tetramethylen-1,4-diisocyanat und Methylendicyclohexy-4,4'diisocyanat oder aromatische Verbindungen wie Methylendiphenyl-4,4'-diisocyanat, 2,4-Toluoldiisocyanat, 2,5-Toluoldiisocyanat, 2,6-Toluoldiisocyanat, m-Phenylendiisocyanat, p-Phenylendiisocyanat, m-Xyloldiisocyanat, Tetramethyl-mxyloldiisocyanat oder Mischungen dieser Isocyanate. Ein Beispiel für kommerziell erhältliche Verbindungen sind die Diisocyanate der DESMODUR®-Reihe (H,I,M,T,W) der Bayer AG, Deutschland. Bevorzugt sind aliphatische Diisocyanate, bei denen Y ein Alkylenrest ist, da diese Materialien führen, die verbesserte UV-Stabilitäten zeigen, welche bei einer Außenanwendung der Polymere von Vorteil ist. Die α,ω-OH-terminierten Alkylene der allgemeinen Formel (6) sind bevorzugt Polyalkylene oder Polyoxyalkylene. Diese sind vorzugsweise weitgehend frei von Kontaminationen aus mono-, tri- oder höherfunktionellen Polyoxyalkylenen sein. Hierbei können Polyetherpolyole, Polytetramethylendiole, Polyesterpolyole, Polycaprolactondiole aber auch α,ω-OHterminierte Polyalkylene auf Basis von Polyvinylacetat, Polyvinylacetatethylencopolymere, Polyvinylchloridcopolymer, Polyisobutlydiole eingesetzt werden. Bevorzugt werden dabei Polyoxyalkyle verwendet, besonders bevorzugt Polypropylenglykole. Derartige Verbindungen sind als Basismaterialien unter anderem für Polyurethan-Weichschäume und für Beschichtungsanwendungen kommerziell mit Molekularmassen Mn bis über 10 000 erhältlich. Beispiele hierfür sind die BAYCOLL® Polyetherpolyole und Polyesterpolyole der Bayer AG, Deutschland oder die Acclaim® Polyetherpolyole der Lyondell Inc., USA. Es können auch monomere α,ω-Alkylendiole, wie Ethylenglykol, Propandiol, Butandiol oder Hexandiol eingesetzt werden. Weiterhin sind als Dihydroxyverbindungen im Sinne der Erfindung ebenfalls Bishydroxyalkylsilicone zu verstehen, wie sie z.B. von der Firma Goldschmidt unter dem Namen Tegomer H-Si 2111, 2311 und 2711 vertrieben werden.

Die Herstellung der oben beschriebenen Copolymere der allgemeinen Formel (1) kann sowohl in Lösung als auch in Festsubstanz, kontinuierlich oder diskontinuierlich erfolgen. Wesentlich dabei ist, dass für die gewählte Polymermischung unter den Reaktionsbedingungen eine optimale und homogene Durchmischung der Bestandteile erfolgt und eine Phasenunverträglichkeit gegebenenfalls durch Lösungsvermittler verhindert wird. Die Herstellung hängt dabei vom verwendeten Lösungsmittel ab. Ist der Anteil der Hartsegmente wie Urethanoder Harnstoffeinheiten groß, so muss gegebenenfalls ein Lösungsmittel mit einem hohen Löslichkeitsparameter wie beispielsweise Dimethylacetamid gewählt werden. Für die meisten Synthesen hat sich THF als ausreichend gut geeignet erwiesen. Vorzugsweise werden alle Bestandteile in einem inerten Lösungsmittel gelöst. Besonders bevorzugt ist eine Synthese ohne Lösungsmittel.

Für die Reaktion ohne Lösungsmittel ist die Homogenisierung der Mischung von entscheidender Bedeutung bei der Umsetzung. Ferner kann die Polymerisation auch durch die Wahl der Reaktionsfolge bei einer Stufensynthese gesteuert werden.

Die Herstellung sollte für eine bessere Reproduzierbarkeit generell unter Ausschluss von Feuchtigkeit und unter Schutzgas, üblicherweise Stickstoff oder Argon erfolgen.

Die Umsetzung erfolgt vorzugsweise, wie bei der Herstellung von Polyurethanen üblich, durch Zugabe eines Katalysator. Geeignete Katalysatoren für die Herstellung sind Dialkylzinnverbindungen, wie beispielsweise Dibutylzinndilaurat, Dibutylzinndiacetat, oder tertiäre Amine wie beispielsweise N,N-Dimethylcyclohexanamin, 2-Dimethylaminoethanol, 4-Dimethylaminopyridin.

Bevorzugte Anwendungen der Polydiorganosiloxan-Harnstoff-Copolymere der allgemeinen Formel (1) sind Verwendungen als Bestandteil in Kleb- und Dichtstoffen, als Basisstoff für thermoplastische Elastomere wie beispielsweise Kabelumhüllungen, Schläuche, Dichtungen, Tastaturmatten, für Membranen, wie selektiv gasdurchlässige Membranen, als Zusatzstoffe in Polymerblends, oder für Beschichtungsanwendungen z.B. in Antihaftbeschichtungen, gewebeverträglichen Überzügen, flammgehemmten Überzügen und als biokompatible Materialien.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen und alle Drücke 0,10 MPa (abs.). Alle Viskositäten wurden bei 20°C bestimmt. Die Molekularmassen wurden mittels GPC in Toluol (0,5 ml/min) bei 23 °C bestimmt(Säule: PLgel Mixed C + PLgel 100 A, Detektor: RI ERC7515)

### Vergleichsbeispiel 1:

In einem 2000 ml-Kolben wurden 1550 g Octamethylcyclotetrasiloxan (D4) und 124 g Bisaminopropyltetramethyldisiloxan (M = 248 g/mol) vorgelegt. Anschließend wurden 1500 ppm Tetramethylammoniumhydroxid zugegeben die Mischung wurde bei 100 °C für 12 Stunden äquilibriert. Danach wurde für 2 Stunden auf 150 °C erhitzt und anschließend 160 g D4-Cylus abdestilliert. Man erhielt so ein Bisaminopropyl-terminiertes Polydimethylsiloxan mit einem Molekulargewicht von 3000 g/mol, welches leicht gelblich eingefärbt war und einen deutlich wahrnembaren Amingeruch besaß.

### Vergleichsbeispiel 2:

Aus dem im Vergleichsbeispiel 1 hergestellten Aminöl wurde in einem 250 ml-Kolben mit Tropftrichter und Rückflußkühler durch Umsetzung mit Diisocyanat ein Blockcopolymer hergestellt. Dabei wurden 40g Bisaminopropyl-PDMS (Mol-Gewicht 3000) in einem Lösungsmittelgemisch aus 80ml trockenem THF und 20ml Dimethylacetamid vorgelegt. Anschließend wurde bei Raumtemperatur eine Lösung von 2,33 g Methylendi-pphenyldiisocyant in 20ml trockenem THF zugetropft und danach 1 Stunde unter Rückfluß gekocht. Nach dem Abkühlen der Lösung wurde das Polymer durch Eintropfen in Hexan ausgefällt. Man erhielt ein Copolymer mit einem Molekulargewicht von Mw 161000 g/mol, welches in der TMA einen Erweichungsbereich bei 154 °C zeigte. Das Blockcopolymer zeigte die gleiche Gelbfärbung wie das als Edukt verwendete Aminöl, was auch durch mehrmaliges Umfällen in Hexan nicht entfernt werden konnte. Der Amin-Geruch war ebenfalls im Polymer noch deutlich wahrnehmbar.

### Beispiel 1

In einem 2000 ml-Kolben mit Tropftrichter und Rückflußkühler wurden 1500g Bishydroxy-terminiertes-Polydimethylsiloxan (Mol-Gewicht 3000 g/mol) vorgelegt. Anschließend wurde bei Raumtemperatur 116 g 1-(3-Aminopropyl-1,1-dimethylsilyl)-2,2-dimethyl-1-aza-2-sila-cyclopentan zugetropft und danach 1 Stunde stehen gelassen. Man erhielt so ein glasklares Bisaminopropyl-terminiertes Polydimethylsiloxan mit einem Molekulargewicht von 3200 g/mol, das laut 29Si-NMR frei von Si-OH-Gruppen war und keinerlei Eigengeruch aufwies.

### Beispiel 2

In einem 2000 ml-Kolben mit Tropftrichter und Rückflußkühler wurden 1080g Bishydroxy-terminiertes-Polydimethylsiloxan (Mol-Gewicht 10800 g/mol) vorgelegt. Anschließend wurde bei einer Temperatur von 60 °C 23,2 g 1-(3-Aminopropyl-1,1-dimethylsilyl)-2,2-dimethyl-1-aza-2-sila-cyclopentan zugetropft und danach 5 Stunden bei 60 °C gerührt. Nach dem Abkühlen erhielt man glasklares ein Bisaminopropyl-terminiertes Polydimethylsiloxan mit einem Molekulargewicht von 11000 g/mol, das laut 29Si-NMR frei von Si-OH-Gruppen war und keinerlei Eigengeruch aufwies.

### Beispiel 3

In einem 250 ml-Kolben mit Tropftrichter und Rückflußkühler wurden 40g Bisaminopropyl-PDMS (Mol-Gewicht 3200) in einem Lösungsmittelgemisch aus 80ml trockenem THF und 20ml Dimethylacetamid vorgelegt. Anschließend wurde bei Raumtemperatur eine Lösung von 2,33 g Methylendi-pphenyldiisocyant in 20ml trockenem THF zugetropft und danach 1 Stunde unter Rückfluß gekocht. Nach dem Abkühlen der Lösung wurde das Polymer durch Eintropfen in Hexan ausgefällt. Man erhielt ein klares Copolymer mit einem Molekulargewicht von Mw 161000 g/mol, welches in der TMA einen Erweichungsbereich bei 154 °C zeigte und keinen Eigengeruch zeigte.

### Beispiele 4-9:

Analog zu Beispiel 3 wurde ein Bisaminopropyl-PDMS mit einem Molekulargewicht von 3200 g/mol oder 11000 g/mol mit anderen Diisocyanaten umgesetzt.

| Beispiel | Aminöl | Diisocyanat | Ausbeute | Molekulargewicht (Mw) [g/mol] | Erweichung |
|---|---|---|---|---|---|
| 4 | 3200 g/mol | IPDI | 95 % | 88.000 | 65 °C |
| 5 | 3200 g/mol | HMDI | 92 % | 95.000 | 63 °C |
| 6 | 3200 g/mol | TDI | 88 % | 114.000 | 131 °C |
| 7 | 3200 g/mol | TMXDI | 96 % | 110.000 | 171 °C |
| 8 | 3200 g/mol | H12MDI | 94 % | 97.000 | 126 °C |
| 9 | 11000 g/mol | MDI | 89 % | 154.000 | Nicht Bestimmt. |
| 10 | 11000 g/mol | IPDI | 87 % | 167.000 | Nicht Bestimmt |
| 11 | 11000 g/mol | TDI | 93 % | 198.000 | Nicht Bestimmt |
| 12 | 11000 g/mol | H12MDI | 91 % | 212.000 | Nicht Bestimmt |

### Beispiel 13:

In einem Zweiwellenkneter der Firma Collin, Ebersberg mit 4 Heizzonen wurde unter Stickstoffatmosphäre in der ersten Heizzone das Diisocyanat und in der zweiten Heizzone das Aminopropylterminierte Siliconöl dosiert. Das Temperaturprofil der Heizzonen war wie folgt programmiert: Zone 1 30°C, Zone 2 100°C, Zone 3 150°C, Zone 4 140°C. Die Drehzahl betrug 50 u/min. Das Diisocyanat (Methylen-bis-(4-Isocyanatocyclohexan)) wurde in Zone 1 mit 304mg/min dosiert und das Aminöl (3200 g/mol) wurde in Zone 2 mit 3,5g/min dosiert. An der Düse des Extruders konnte ein klares Polydimethylsiloxan-Polyharnstoff-Blockcopolymer mit einem Molekulargewicht von 110.000 g/mol und einer Erweichungstemperatur von 126°C abgenommen werden, welches kein Eigengeruch aufwies.

### Beispiel 14:

Analog zu Beispiel 13 wurden in einem Zweiwellenkneter der Firma Collin, Ebersberg (Teach-Line) mit 4 Heizzonen unter Stickstoffatmosphäre bei folgendem Temperaturprofil (Zone 1 30°C, Zone 2 90°C, Zone 3 120°C, Zone 4 130°C, Drehzahl = 50 u/min) das Diisocyanat (Isophorondiisocyanat) in Zone 1 mit 179 mg/min und das Aminöl (3200 g/mol) in Zone 2 mit 3,5g/min dosiert. An der Düse des Extruders konnte ein klares, geruchsfreies Polydimethylsiloxan-Polyharnstoff-Blockcopolymer mit einer Erweichungstemperatur von 58°C abgenommen werden. Es hatte ein Molekulargewicht von 52.000 g/mol.

### Beispiel 15

Analog zu Beispiel 13 wurden in einem Zweiwellenkneter der Firma Collin, Ebersberg (Teach-Line) mit 4 Heizzonen unter Stickstoffatmosphäre bei folgendem Temperaturprofil (Zone 1 30°C, Zone 2 100°C, Zone 3 170°C, Zone 4 180°C, Drehzahl = 50 u/min) das Diisocyanat (Toluol 2,4-diisocyant) in Zone 1 mit 111 mg/min und das Aminöl (11.000 g/mol) in Zone 2 mit 5,2 g/min dosiert. An der Düse des Extruders konnte ein Polydimethylsiloxan-Polyharnstoff-Blockcopolymer mit einer Erweichungstemperatur von 87°C abgenommen werden. Es hatte ein Molekulargewicht von 195.000 g/mol.

### Beispiel 16

In einem 250 ml-Kolben mit Tropftrichter und Rückflußkühler wurden 32g Bisaminopropyl-PDMS (Mol-Gewicht 3200)und 5 g Bishydroxypropyl-PDMS (Tegomer 2711, Th. Goldschmidt AG, Mol-Gewicht 5200) in einem Lösungsmittelgemisch aus 80ml trockenem THF und 20ml Dimethylacetamid vorgelegt. Nach Zugabe von 3 Tropfen Dibutylzinndilaurat wurde bei Raumtemperatur eine Lösung von 2,5 g Isophorondiisocyanat in 20ml trockenem THF zugetropft und danach 2 Stunde unter Rückfluß gekocht. Nach dem Abkühlen der Lösung wurde das Polymer durch Eintropfen in Hexan ausgefällt.

Man erhielt ein Copolymer mit einem Molekulargewicht von Mw 78000 g/mol, welches einen Erweichungspunkt bei 42 °C hat.

### Beispiel 17

In einem 250 ml-Kolben mit Tropftrichter und Rückflußkühler wurden 32g Bisaminopropyl-PDMS (Mol-Gewicht 3200)und 0,9 g Butandiol in einem Lösungsmittelgemisch aus 80ml trockenem THF und 20ml Dimethylacetamid vorgelegt. Nach Zugabe von 3 Tropfen Dibutylzinndilaurat wurde bei Raumtemperatur eine Lösung von 4,5 g Isophorondiisocyanat in 20ml trockenem THF zugetropft und danach 2 Stunde unter Rückfluß gekocht. Nach dem Abkühlen der Lösung wurde das Polymer durch Eintropfen in Hexan ausgefällt. Man erhielt ein Copolymer mit einem Molekulargewicht von Mw 63000 g/mol.

### Beispiel 18

In einem 250 ml-Kolben mit Tropftrichter und Rückflußkühler wurden 32g Bisaminopropyl-PDMS (Mol-Gewicht 3200)und 1,2 g Hexamethylendiamin in einem Lösungsmittelgemisch aus 80ml trockenem THF und 20ml Dimethylacetamid vorgelegt. Nach Zugabe einer Lösung von 4,5 g Isophorondiisocyanat in 20ml trockenem THF wurde 2 Stunde unter Rückfluß gekocht. Nach dem Abkühlen der Lösung wurde das Polymer durch Eintropfen in Hexan ausgefällt.
Man erhielt ein Copolymer mit einem Molekulargewicht von Mw 73000 g/mol.

Die vorangegangenen Beispiele zeigen, daß hochmolekulare Siloxan-Harnstoff-Blockcopolymere auch mit Aminosilikonen hergestellt werden können, welche nicht durch besondere Äquilibrierungsreaktionen hergestellt werden. Diese Materialien zeigen nicht nur ein besseres Eigenschaftsbild als die bisher bekannten Materialien (geruchsfrei, absolut farblos), sondern sind auch wesentlich schneller herzustellen.

## Patentansprüche

1. Zusammensetzung, enthaltend ein
Organopolysiloxan/Polyharnstoff/Polyurethan-Blockcopolymer (A) der allgemeinen Formel (1) 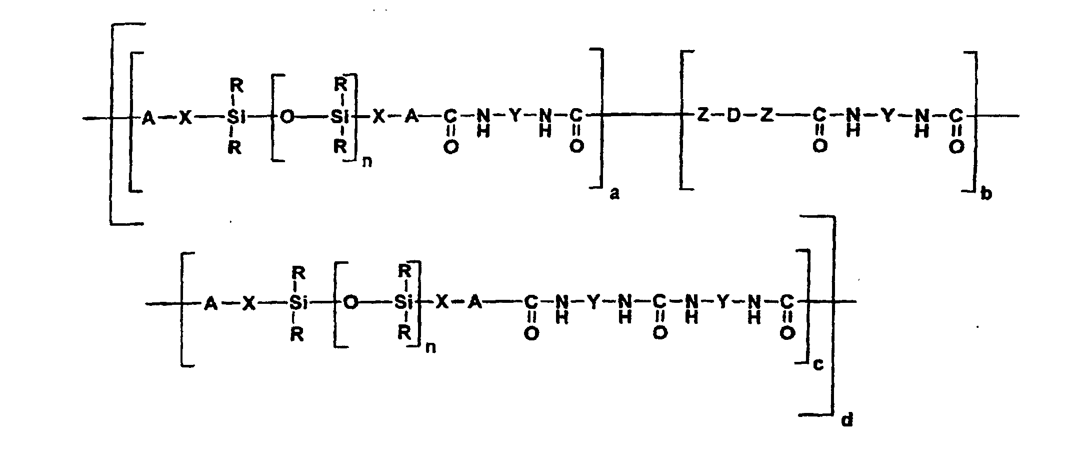 welches erhältlich ist durch ein Verfahren, welches zwei Schritte umfasst, wobei
im ersten Schritt ein cyclisches Silazan der allgemeinen Formel (2) 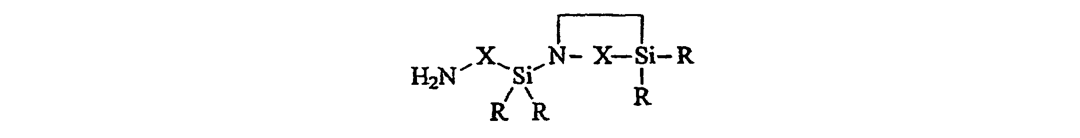 mit siliziumorganischer Verbindung der allgemeinen Formel (3),
**(HO)(R**_{**2**}**SiO)**_{**n-1**}**[H]**
zu Aminoalkylpolydiorganosiloxan der allgemeinen Formel (4)
**H**_{**2**}**N-X-[SiR**_{**2**}**O]**_{**n**}**SiR**_{**2**}**-X-NH**_{**2**}
umgesetzt wird, und
im zweiten Schritt das Aminoalkylpolydiorganosiloxan der allgemeinen Formel (4) mit Diisocyanat der allgemeinen Formel (5)
**OCN-Y-NCO**
polymerisiert wird, wobei
**R** einen einwertigen, gegebenenfalls durch Fluor oder Chlor substituierten Kohlenwasserstoffrest mit 1 bis 20 Kohlenstoffatomen,
**X** einen Alkylen-Rest mit 1 bis 20 Kohlenstoffatomen, in dem einander nicht benachbarte Methyleneinheiten durch Gruppen -O- ersetzt sein können,
**A** ein Sauerstoffatom oder eine Aminogruppe -NR'-,
**Z** ein Sauerstoffatom oder eine Aminogruppe -NR'-,
**R'** Wasserstoff oder einen Alkylrest mit 1 bis 10 Kohlenstoffatomen,
**Y** einen zweiwertigen, gegebenenfalls durch Fluor oder Chlor substituierten Kohlenwasserstoffrest mit 1 bis 20 Kohlenstoffatomen,
**D** einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können,
**n** eine Zahl von 1 bis 4000,
**a** eine Zahl von mindestens 1,
**b** eine Zahl von 0 bis 40,
**c** eine Zahl von 0 bis 30 und
**d** eine Zahl größer 0 bedeuten.

2. Zusammensetzung nach Anspruch 1, bei dem **n** eine ganze Zahl von 25 bis 250 bedeutet.

3. Zusammensetzung nach Anspruch 1 oder 2, bei dem **R** Methyl ist.

4. Zusammensetzung nach Anspruch 1 bis 3, bei dem **X** gleich Propylen ist.

5. Zusammensetzung nach Anspruch 1-4, bei dem **Z** eine Aminogruppe ist.

6. Zusammensetzung nach Anspruch 1-4, bei dem **Z** eine Sauerstoff-Atom ist.

7. Zusammensetzung nach Anspruch 1-6, bei dem **Y** ein Aralkylen-Rest ist.

8. Zusammensetzung nach Anspruch 1-6, bei dem **Y** ein linearer oder cyclischer Alkylen-Rest ist.

## Claims

1. Composition comprising a n organopolysiloxane/polyurea/polyurethane block copolymer (A) of the general formula (1) 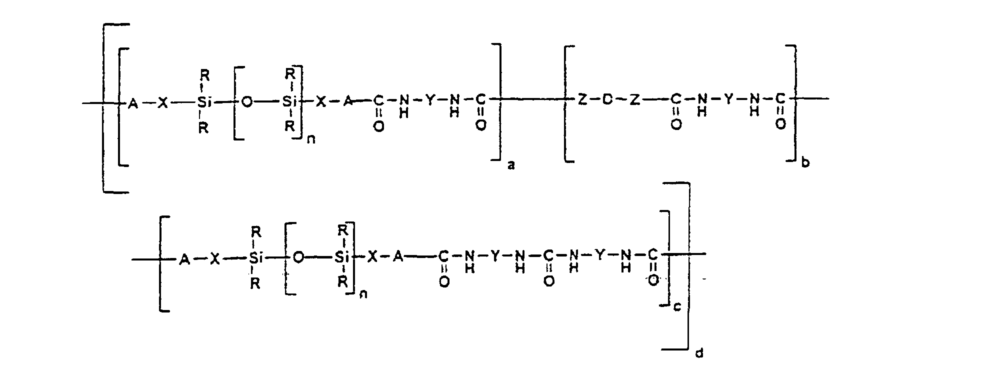 which is obtainable by a process which comprises two steps, where
in the first step a cyclic silazane of the general formula (2) 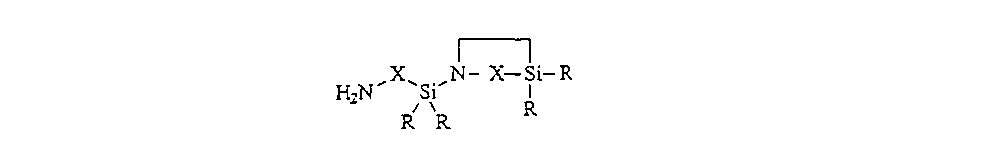 is reacted with organosilicon compound of the general formula (3)
(HO) (R₂SiO)ₙ₋₁[H]
to give aminoalkylpolydiorganosiloxane of the general formula (4)
H₂N-X-[SiR₂O]ₙSiR₂-X-NH₂
and in the second step the aminoalkylpolydiorganosiloxane of the general formula (4) is polymerized with diisocyanate of the general formula (5)
OCN-Y-NCO
where
R is a monovalent hydrocarbon radical optionally substituted by fluorine or chlorine and having 1 to 20 carbon atoms,
X is an alkylene radical having 1 to 20 carbon atoms, in which nonadjacent methylene units may have been replaced by -O- groups,
A is an oxygen atom or an amino group -NR'-,
Z is an oxygen atom or an amino group -NR'-,
R' is hydrogen or an alkyl radical having 1 to 10 carbon atoms,
Y is a divalent hydrocarbon radical optionally substituted by fluorine or chlorine and having 1 to 20 carbon atoms,
D is an alkylene radical optionally substituted by fluorine, chlorine, C₁-C₆-alkyl or C₁-C₆-alkyl ester and having 1 to 700 carbon atoms, in which nonadjacent methylene units may have been replaced by -O-, -COO-, -OCO-, or -OCOO- groups,
n is a number from 1 to 4000,
a is a number which is at least 1,
b is a number from 0 to 40,
c is a number from 0 to 30, and
d is a number greater than 0.

2. Composition of Claim 1, wherein n is an integer from 25 to 250.

3. Composition of Claim 1 or 2, wherein R is methyl.

4. Composition of Claim 1 to 3, wherein X is propylene.

5. Composition of Claim 1-4, wherein Z is an amino group.

6. Composition of Claim 1-4 wherein Z is an oxygen atom.

7. Composition of Claim 1-6, wherein Y is an aralkylene radical.

8. Composition of Claim 1-6, wherein Y is a linear or cyclic alkylene radical.

## Revendications

1. Composition contenant un copolymère à blocs d'organopolysiloxane/polyurée/polyuréthanne (A) de formule générale (1) 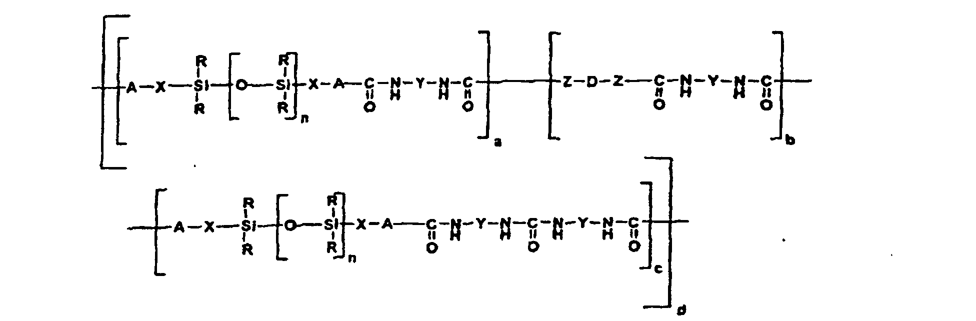 qui peut être obtenu par un procédé comprenant deux étapes, dans lequel
dans une première étape, on transforme un silazane cyclique de formule générale (2) 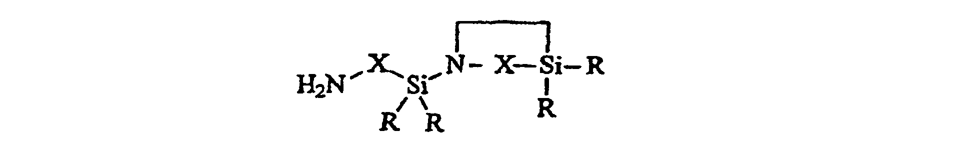 avec un composé organosilicié de formule générale (3)
(HO) (R₂SiO)ₙ₋₁[H]
en aminoalkylpolydiorganosiloxane de formule générale (4)
H₂N-X-[SiR₂O]ₙSiR₂-X-NH₂
et
dans une deuxième étape, on polymérise l'aminoalkylpolydiorganosiloxane de formule générale (4) avec un diisocyanate de formule générale (5)
OCN-Y-NCO
où
R signifie un radical hydrocarboné monovalent, le cas échéant substitué par fluor ou chlore, comprenant 1 à 20 atomes de carbone,
X signifie un radical alkylène comprenant 1 à 20 atomes de carbone, dans lequel des unités méthylène non adjacentes peuvent être remplacées par des groupements -O-,
A signifie un atome d'oxygène ou un groupe amino -NR'-,
Z signifie un atome d'oxygène ou un groupe amino - NR'-,
R' signifie hydrogène ou un radical alkyle comprenant 1 à 10 atomes de carbone,
Y signifie un radical hydrocarboné divalent le cas échéant substitué par fluor ou chlore comprenant 1 à 20 atomes de carbone,
D signifie un radical alkylène le cas échéant substitué par fluor, chlore, alkyle en C₁ à C₆ ou ester d'alkyle en C₁ à C₆, comprenant 1 à 700 atomes de carbone, dans lequel des unités méthylène non adjacentes peuvent être remplacées par des groupements -O-, -COO-, -OCO- ou -OCOO-,
n signifie un nombre de 1 à 4000,
a signifie un nombre d'au moins 1,
b signifie un nombre de 0 à 40,
c signifie un nombre de 0 à 30 et
d signifie un nombre supérieur à 0.

2. Composition selon la revendication 1, où n signifie un nombre entier de 25 à 250.

3. Composition selon la revendication 1 ou 2, où R représente méthyle.

4. Composition selon la revendication 1 à 3, où X représente propylène.

5. Composition selon la revendication 1 à 4, où Z est un groupement amino.

6. Composition selon la revendication 1 à 4, où Z est un atome d'oxygène.

7. Composition selon la revendication 1 à 6, où Y est un radical aralkylène.

8. Composition selon la revendication 1 à 6, où Y est un radical alkylène linéaire ou cyclique.
